(19) Europäisches Patentamt
European Patent Office
Office européen des brevets

(11) Numéro de publication: 0 165 831
B1

(12) # FASCICULE DE BREVET EUROPÉEN

(45) Date de publication du fascicule du brevet: 08.03.89

(51) Int. Cl.⁴: **B 01 J 49/02**, B 01 J 47/02

(21) Numéro de dépôt: 85400848.9

(22) Date de dépôt: 30.04.85

(54) **Installation et procédé pour le traitement de liquide, en particulier pour la déminéralisation d'eau traversant un lit de matière granuleuse active compacte en position haute et régénere périodiquement a contre-courant.**

(30) Priorité: 03.05.84 FR 8406881

(43) Date de publication de la demande: 27.12.85 Bulletin 85/52

(45) Mention de la délivrance du brevet: 08.03.89 Bulletin 89/10

(84) Etats contractants désignés: AT BE CH DE FR GB IT LI LU NL SE

(56) Documents cité:
DE-A-2 152 179
DE-B-1 070 596

CHEMICAL ABSTRACTS, vol. 97, no. 26, décembre 1982, page 422, no. 222724f, Columbus, Ohio, US; & CS - A - 197 930 (Z. MATEJKA et al.) 01.06.1982

(73) Titulaire: SOCIETE D'AMENAGEMENT URBAIN ET RURAL S.A. S.A.U.R., Challenger 1, Avenue Eugène Freyssinet, F-78064 SAINT QUENTIN YVELINES CEDEX (FR)

(72) Inventeur: Deguin, Alain, 50,56, rue de la Procession, F-75015 Paris (FR)

(74) Mandataire: Ahner, Francis, CABINET REGIMBEAU 26, avenue Kléber, F-75116 Paris (FR)

EP 0 165 831 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne une installation et un dispositif pour le traitement et en particulier pour la déminéralisation de liquides, tels que l'eau, les hydro carbures et les huiles. Le traitement du liquide est obtenu par déplacement d'ions lors de son passage au travers d'un lit de matière granuleuse maintenu à l'état compacté. L'installation et le procédé objets de la présente invention sont destinés à permettre une régénération à contre-courant du lit de matière granuleuse maintenu en position basse.

L'invention vise plus particulièrement le traitement de l'eau en vue d'en éliminer les nitrates et les sulfates. Pour réaliser un tel traitement, on fait appel au principe de l'échange d'ions par circulation ascendante du liquide à traiter au travers d'un lit de matière granuleuse qui est avantageusement constituée par une ou plusieurs résines échangeuses d'ions. Il est clair qu'un tel type de matière granuleuse doit périodiquement être régénéré, afin de conserver une bonne activité tout au long de la phase de traitement de l'eau.

La présente invention permet précisément de régénérer à contre-courant la matière granuleuse du lit, c'est-à-dire en faisant passer des solutions régénérantes en courant descendant, inverse du sens de circulation du liquide à traiter. Un bon traitement des liquides nécessite toujours que les dernières couches de résines traversées par le liquide à traiter soient parfaitement régénérées. C'est la raison pour laquelle il est impératif que le lit de matière granuleuse reste à l'état compacté, lorsqu'il est traversé à contre-courant par le ou les liquide(s) de régénération.

Dans la technique antérieure, la régénération à contre-courant consistait à bloquer le lit de résines soit par envoi, à contre-courant du liquide régénérant, d'un courant d'air ou d'eau, soit mécaniquement entre deux plateaux à buselures.

Dans ce dernier cas, on faisait habituellement appel à un procédé utilisant une sorte de vessie gonflable à l'intérieur de l'appareil renfermant la résine. Un autre procédé connu faisait appel à des billes de polyéthylène disposées entre le plateau supérieur à buselures et la résine, afin d'éviter l'expansion de cette dernière. Un troisième procédé consistait à remplir de résine la capacité située entre les deux plateaux à buselures, de façon à occuper environ 95 % de l'espace disponible et, soit à régénérer du haut vers le bas de l'appareil tandis que l'eau circule de bas en haut pendant le traitement à une vitesse suffisante pour bloquer le lit de résine contre le plateau supérieur, soit encore à régénérer de bas en haut à une vitesse suffisante pour bloquer le lit de résine contre le plateau supérieur et faire passer l'eau de haut en bas pendant la phase de traitement.

Dans les deux variantes de ce dernier procédé, tout ou partie de la résine doit être sortie de l'appareil pour en assurer périodiquement un détassage dans un dispositif placé à l'extérieur. Il fallait donc réintroduire ultérieurement la résine dans l'appareil.

En outre, l'état de la technique peut être complété par la citation de DE-B-1 070 596 qui décrit une installation pour la déminéralisation de liquides tels que l'eau comprenant une capacité de traitement, une capacité d'expansion surmontant ladite capacité de traitement, des dispositifs assurant la mise en communication ou l'isolement des deux capacités et des moyens assurant la circulation périodique du liquide à traiter, de la solution de régénération et du liquide de rinçage.

L'objet de la présente invention permet précisément d'écarter ces inconvénients en assurant une sortie de la résine pour effectuer son détassage en une seule opération, en ménageant une capacité d'expansion directement en charge sur le logement habituel de la résine.

Conformément à la présente invention, l'installation de traitement de liquide est caractérisée en ce qu'elle comprend:

- une capacité de traitement constituée par une première virole cylindrique verticale fermée à sa partie inférieure par un fond bombé et à sa partie supérieure par un fond bombé légèrement convexe vers le haut,
- une capacité d'expansion du lit constituée par une seconde virole cylindrique verticale surmontant coaxialement ladite capacité de traitement, ladite seconde virole ayant un fond bombé concave vers le bas, commun avec le fond de la capacité de traitement et présentant un diamètre supérieur à celui de la première virole cylindrique, la partie supérieure de ladite seconde virole restant entièrement ouverte à l'air libre et étant équipée, de préférence en son centre, d'un dispositif de déversement;
- des dispositifs assurant la mise en communication ou l'isolement des deux capacités de traitement et d'expansion pour permettre périodiquement un transfert de la matière granuleuse et un détassage du lit;
- des moyens assurant la circulation périodique du liquide à traiter, de la solution de régénération ainsi que d'un liquide de rinçage, ces moyens étant agencés de manière à assurer:
  - un détassage périodique du lit par passage d'une partie de la matière granuleuse du lit dans la capacité d'expansion, au moyen d'un courant ascendant de liquide après mise en communication des deux capacités;
  - un retour de la totalité de la matière granuleuse du lit dans la capacité de traitement 10;
  - une régénération et un rinçage lent par circulation descendante de liquide à travers le lit de matière granuleuse, après isolement des deux capacités;
  - un compactage du lit en position haute dans la capacité de traitement sous l'action d'un courant ascendant de liquide, le rinçage rapide du lit s'effectuant dans cette position haute, et
  -

un traitement par circulation ascendante du liquide à travers le lit compacté en position haute.

D'autres caractéristiques et avantages de la présente invention apparaîtront à la lecture détaillée faite ci-après, notamment en référence aux dessins annexés, sur lesquels:

la figure 1 représente une vue schématique en coupe de l'installation de traitement selon l'invention, et

- les figures 2a à 2d illustrent les principales étapes du procédé de traitement selon l'invention.

Sur ces diverses figures, les éléments identiques seront désignés par les mêmes références.

L'installation de traitement selon l'invention comprend tout d'abord une capacité de traitement 10 qui est constituée par une première virole cylindrique verticale 12. Cette virole cylindrique verticale 12 est fermée à ses deux parties inférieure et supérieure respectivement par des fonds bombés 14 et 16. L'installation comporte également une capacité 20 d'expansion du lit de matière granuleuse 22, qui est constituée par une seconde virole cylindrique verticale 24 surmontant coaxialement la capacité de traitement 10. Tel que cela apparît sur les dessins annexés, la seconde virole 24 est entièrement ouverte à l'air libre dans sa partie supérieure et fermée par un fond bombé concave vers le bas 16 servant également de fermeture à la partie supérieure de la virole 12. On notera que la seconde virole cylindrique verticale 24 présente un diamètre supérieur à celui de la première virole cylindrique 12. La capacité d'expansion 20 est équipée d'un trop-plein 26 muni d'une tubulure 28 d'évacuation de liquide de détassage.

Tel que cela apparaît sur les dessins annexés, la seconde virole 24 peut être mise en communication avec la première virole 12 au moyen de tubulure 30 équipée de dispositifs d'isolement 32 des deux capacités 10 et 20. Ces dispositifs d'isolement 32 peuvent avantageusement être constitués par exemple par des vannes à passage direct. Dans la pratique, le dispositif d'isolement peut être constitué par une seule tubulure 30 ou encore par une pluralité de tubulures réparties à la périphérie de l'installation en observant un décalage angulaire constant. Le diamètre inférieur de ces tubulures peut être par exemple compris entre 25 et 100 mm, le diamètre exact étant fonction du nombre de tubulures 30 équipant l'installation.

L'installation comprend en outre un ensemble de moyens de canalisation, de vannes et de pompes, destiné à assurer la circulation périodique du liquide à traiter, de la solution de régénération ainsi que des liquides de rinçage et de détassage.

Le lit de matière granuleuse ou de résine 22 repose, dans sa position de régénération, sur le plancher 34 écarté du fond bombé 14 de la capacité de traitement 10, ledit plancher 34 étant en outre équipé d'un dispositif de drainage 36 agencé en partie basse de la première virole 12. La partie supérieure de la capacité de traitement 10 est équipée d'un second plancher 38 écarté du fond bombé légèrement convexe vers le haut 16 qui est commun aux viroles cylindriques 12 et 24. Le plancher 28 est également équipé d'un dispositif de drainage agencé en partie haute de la première virole 12. Un tel dispositif de drainage est avantageusement constitué par des tuyères 42 et des soupapes 40 assurant le passage à grand débit dans le sens ascendant et à petit débit dans le sens descendant, de façon à permettre respectivement le traitement d'une part et la régénération à contre-courant d'autre part. Il est en outre important d'observer que le dispositif d'isolement 30, 32 des capacités de traitement 10 et d'expansion 20 part d'un ou de plusieurs orifices situés sur la première virole cylindrique 12 en dessous du plateau 38 équipé du dispositif de drainage 40, 42, mais légèrement au-dessus du niveau de la matière granuleuse 22, lorsque celle-ci repose sur le plancher 24. Les tubulures 30 de ce dispositif d'isolement débouchent dans la capacité d'expansion 20 par un ou plusieurs orifices situés en point bas 18 sur le fond bombé 16 de concavité dirigé vers le bas, commun aux deux capacités 10 et 20.

Dans la pratique, le fond bombé de concavité dirigé vers le bas, commun aux deux capacités 10 et 20, présente une faible courbure de manière à minimiser le volume d'eau compris entre le fond 16 et le plancher supérieur 38.

La capacité d'expansion 20 est équipée d'une tubulure 44 d'admission de liquide complémentaire de détassage munie d'une vanne 46. La capacité de traitement 10 est par ailleurs équipée en partie haute d'une tubulure 48 d'évacuation du liquide de traitement, en passant par la vanne 50 pour rejoindre la tubulure 52. A cet endroit, un système de bipasse est apte à mélanger du liquide traité avec du liquide non traité, par exemple au moyen d'un organe de réglage 54, notamment une vanne.

Les liquides de rinçage rapide et de traitement pénètrent dans la partie basse de la capacité de traitement 10 au moyen de la tubulure 56 reliée à la tubulure 58 d'arrivée des liquides par la vanne 60. Le liquide de rinçage rapide est évacué par la tubulure 28 en passant par la tubulure 48 et la vanne 62.

Le ou les liquide(s) régénérant(s) pénètre(nt) dans la capacité de traitement 10 par la tubulure 64 munie d'une vanne d'isolement 66.

L'évacuation du ou des liquide(s) régénérant(s) se fait par les tubulures 56 et 28 en passant par la vanne 68.

Cette installation permettant la mise en oeuvre du procédé de traitement précédemment défini, fonctionne de la manière suivante.

A la fin d'un cycle de traitement, illustré à la figure 1, et avant l'opération de régénération, un courant de liquide à fort débit est envoyé par la

vanne 60 ouverte en transitant par les tubulures 58 et 56, ce qui a pour conséquence de soulever le lit de matière granuleuse 22. Cette opération correspond au détassage du lit qui, au repos, occupait environ 95 % du volume compris entre les planchers 34 et 38 de la virole cylindrique 12. L'ouverture de la ou des vanne(s) 32 autorise le passage de la résine dans la capacité d'expansion 20 située en charge sur la capacité de traitement 10. Le volume détassé de la résine correspond approximativement à une fois et demi son volume à l'état compacté tel qu'il se présente en cours de traitement. Il est clair que la hauteur de la seconde virole 24 constituant la capacité d'expansion 20 doit être déterminée de manière à éviter tout risque de débordement de la matière granuleuse.

Au cours de cette opération, le liquide utilisé pour assurer le détassage, par exemple avantageusement constitué par de l'eau, se trouve évacué par le dispositif de déversement 26, puis par la tubulure 28.

La résine se trouve maintenue en expansion à un niveau constant dans la capacité 20 par un ajustement pré-réglé du débit du liquide de détassage. Cette étape se trouve illustrée par la figure 2a.

Lorsque l'opération de détassage de la résine est terminé, l'admission d'eau par la vanne 60 est arrêtée et la résine reprend sensiblement sa position, tel qu'illustré à la figure 2b, sous le seul effet de son propre poids. De manière à faciliter le retour de la totalité de la résine dans la capacité de traitement 10, la capacité d'expansion 20 est avantageusement équipée d'un dispositif d'admission d'eau sous pression 44 en passant par la vanne 46 qui est alors ouverte. Ce dispositif schématiquement représenté sur la figure 1 peut avantageusement être constitué par une rampe circulaire d'aspersion.

Simultanément à la fermeture de la vanne 60, la vanne 68 est ouverte afin d'assurer l'évacuation du liquide admis par la vanne 46.

Le retour de la résine dans la capacité de traitement 10 est ainsi facilité par l'ouverture de la vanne 68 et l'appel du liquide introduit par la tubulure 44 vers la sortie, au travers des tubulures 56 et 28 en créant un mouvement descendant.

Lorsque la totalité de la résine 22 a regagné la capacité de traitement 10, les dispositifs d'admission d'eau par la vanne 46 et la ou les vanne(s) d'isolement 32 des capacités 10 et 20 se ferment. La vanne 66 s'ouvre de manière à laisser passer le ou les liquide(s) de régénération pénétrant dans la capacité de traitement 10 par la tubulure 64 pour en ressortir par les tubulures 56 et 28, après être passé(s) par la vanne 68 restée ouverte (voir figure 2c).

Un rinçage lent à l'eau succède au passage du ou des liquide(s) régénérant(s) par le même circuit des vannes 66 et 68 avec la même vitesse de passage dans le lit de résine 22.

A la fin de l'opération de rinçage lent, les vannes 66 et 68 se ferment et les vannes 60 et 62 s'ouvrent pour permettre le passage d'un courant ascendant d'un liquide de rinçage rapide à un débit tel que le lit de matière granuleuse 22 soit compacté en partie haute de la capacité de traitement 10, tel qu'illustré sur la figure 2d.

Cette opération consiste à rincer la résine des dernières traces de régénérants tout en la maintenant à l'état compacté en position haute de façon à conserver l'avantage d'une régénération à contre-courant, c'est-à-dire sans perturber les couches de résine préalablement régénérées dans le sens descendant.

A la fin de l'opération de rinçage rapide, la phase de traitement est reprise par le même circuit d'admission que celui du rinçage rapide, mais en ajustant le débit à sa valeur retenue, laquelle ne peut être que supérieure ou au moins égale à celle du débit de rinçage rapide, de sorte que le lit de matière granuleuse 22 soit maintenu à l'état compacté en position haute de la capacité de traitement 10 en permanence.

En outre, le circuit d'évacuation du liquide traité empreinte les tubulures 48 et 52, la vanne 50 restant ouverte pendant que la vanne 62 se ferme.

Un mélange éventuel du liquide traité avec celui non traité peut être pratiqué par un réglage de la vanne 54, de façon à ne traiter qu'une fraction du débit chaque fois que cela est possible.

L'installation et le procédé objets de la présente invention permettent donc d'éliminer les nitrates et les sulfates par permutation avec un autre type d'anion préalablement fixé sur la résine. A cet effet la capacité de traitement 10 contient par exemple une résine anionique forte, apte à fixer les anions. Elle peut par exemple être constituée par une matrice copolymère comportant des sites actifs chargés positivement tels que des sites actifs aminés quaternisés.

Pour la mise en oeuvre du procédé de la présente invention, une solution de chlorure de sodium peut avantageusement être utilisée comme liquide régénérant, avec ou sans recyclage d'une fraction des éluats de régénération récupérés à chaque cycle. C'est la fraction terminale de la régénération et la phase de rinçage lent qui sont récupérables et recyclables en raison de leur faible teneur en nitrates et en sulfates, et de leur teneur encore suffisamment élevée en chlorures nécessaires à l'échange lors de la régénération.

Lorsque l'eau à traiter est fortement chargée en chlorures, la régénération au chlorure de sodium peut être avantageusement complétée par le passage ultérieur d'une solution de bicarbonate de sodium, en quantité suffisante pour assurer l'échange de quelques sites de la résine occupés d'ions chlorures, par des ions hydrogénocarbonates.

L'affinité de la résine retenue est voisine pour les ions chlorures et les ions hydrogénocarbonates, de sorte qu'une régénération directe par du bicarbonate de sodium ne permet pas de déplacer les ions

d'acides forts commes les nitrates et les sulfates, lesquels présentent une meilleure affinité avec la résine.

L'avantage d'une double régénération par le chlorure de sodium, puis par le bicarbonate de sodium en faible quantité est donc de faciliter l'échange:

$$RCl + HCO_3^- \rightleftarrows RHCO + Cl^-$$

Ainsi, pendant la phase du traitement de l'eau, l'échange des ions nitrates et sulfates s'effectue avec l'ion $HCO_3^-$, puis avec l'ion $Cl^-$. L'eau traitée se charge d'abord en $HCO_3^-$ diminuant le cas échéant son caractère agressif vis-à-vis du calcaire, et du même coup la teneur en chlorure reste stable au lieu de s'accroître à une valeur risquant d'excéder la limite admise selon les normes en vigueur pour l'eau destinée à la consommation. Ainsi, le procédé et l'installation objets de la présente invention peuvent avantageusement être appliqués à tout type d'eau déjà chargée ou non en ions chlorures.

La teneur en ions hydrogénocarbonates n'est par ailleurs pas limitée par les normes en vigueur pour l'eau destinée à la consommation, et diminue, à l'inverse des ions chlorures, les risques de corrosion des conduites de distribution.

Certains liquides et notamment l'eau présentent simultanément des teneurs élevées en nitrates, sulfates, calcium et magnésium, s'exprimant pour ces deux derniers ions par la mesure de la dureté de l'eau.

Dans le cadre de la présente invention, l'eau peut également être traitée simultanément de manière à être adoucie en utilisant de façon additionnelle une résine échangeuse d'ions cationique fortement acide.

Le procédé objet de la présente invention peut donc être quelque peu modifié pour réaliser en un traitement unique l'élimination des nitrates, des sulfates et l'abaissement de la dureté de l'eau sans affecter le processus de régénération du lit de traitement. Il suffit en effet de placer un mélange homogène d'une résine anionique telle que définie précédemment et d'une résine cationique, pour réaliser simultanément un adoucissement, une dénitratation et désulfatation de l'eau. Dans pareil cas, l'opération de régénération est réalisée par la mise en oeuvre des séquences précédemment définies en utilisant le ou les mêmes régénérants.

L'avantage du procédé modifié de la sorte est de pouvoir réaliser en un seul et même appareillage deux traitements habituellement séparés sans que le mode de régénération original objet de la présente invention en soit pour autant affecté.

Bien entendu, la présente invention ne se trouve nullement limitée par les modes de réalisation et de mise en oeuvre précédemment décrits, mais il est parfaitement possible, sans pour autant sortir du cadre de la présente invention, d'en imaginer un certain nombre de variantes de détail.

**Revendications**

1. Installation pour le traitement et en particulier pour la déminéralisation de liquides, tels que l'eau, les hydrocarbures et les huiles, par passage au travers d'un lit de matière granuleuse, destinée à permettre une régénération à contre-courant du sens de passage du liquide dans le lit lors du traitement, ledit lit étant maintenu à l'état compacté pendant tout le traitement, du type comprenant:

- une capacité de traitemient (10) constituée par une première virole cylindrique verticale (12), fermée à sa partie inférieure par un fond bombé (14) et à sa partie supérieure par un fond bombé légèrement convexe vers le haut (16);
- une capacité d'expansion (20) du lit constituée par une seconde virole cylindrique verticale (24) surmontant coaxialement ladite capacité de traitement (10), ladite seconde virole (24) ayant un fond bombé concave vers le bas (16), commun avec le fond de la capacité de traitement (10) et présentant un diamètre supérieur à celui de la première virole cylindrique (12), la partie supérieure de ladite seconde virole (24) restant entièrement ouverte à l'air libre et étant équipée, de préférence en son centre, d'un dispositif de déversement (26, 28);
- des dispositifs (30, 32) assurant la mise en communication ou l'isolement des deux capacités de traitement (10) et d'expansion (20) pour permettre périodiquement un transfert de la matière granuleuse (22) et un détassage du lit;
- des moyens assurant la circulation périodique du liquide à traiter, de la solution de régénération ainsi que d'un liquide de rinçage, ces moyens étant agencés de manière à assurer:

• un détassage périodique du lit (22) par passage d'une partie de la matière granuleuse du lit dans la capacité d'expansion (20) au moyen d'un courant ascendant de liquide après mise en communication des deux capacités (10 et 20);
• un retour de la totalité de la matière granuleuse du lit (22) dans la capacité de traitement (10);
• une régénération et un rinçage lent par circulation descendante de liquide à travers le lit de matière granuleuse (22), après isolement des deux capacités (10 et 20);
• un compactage du lit en position haute dans la capacité de traitement (10) sous l'action d'un courant ascendant de liquide, le rinçage rapide du lit s'effectuant dans cette position haute, et
• un traitement par circulation ascendante du liquide au travers du lit maintenu à l'état compacté en position haute.

2. Installation selon la revendication 1,

caractérisée en ce que la capacité d'expansion (20) est équipée d'une alimentation d'eau sous pression (44, 46) pour faciliter le retour de la matière granuleuse dans la capacité de traitement (10).

3. Installation selon l'une des revendications 1 et 2, caractérisée en ce que le lit de matière granuleuse repose sur un plancher (34) écarté du fond bombé (14) de la capacité de traitement (10) et équipé d'un dispositif de drainage (36) agencé en partie basse de la première virole (12).

4. Installation selon l'une des revendications 1 à 3, caractérisée en ce que le dispositif d'isolement (30, 32) ménagé entre les deux capacités (10 et 20) est constitué par une ou plusieurs tubulure(s) (30) équipée(s) de vannes à passage direct (32), de diamètre suffisamment grand pour assurer le passage de la matière granuleuse sans risque de bourrage.

5. Installation selon l'une des revendications 1 à 4, caractérisée en ce que la partie supérieure de la capacité de traitement (10) est équipée d'un plateau (38) écarté du fond bombé (16), commun aux capacités de traitement (10) et d'expansion (20) et muni d'un dispositif de drainage, lui-même constitué par des tuyères (42) et des soupapes (40) assurant le passage à grand débit dans le sens ascendant et à petit débit dans le sens descendant, de façon à permettre respectivement le traitement d'une part et la régénération à contre-courant d'autre part.

6. Installation selon l'une des revendications 1 à 5, caractérisée en ce que le dispositif d'isolement (30, 32) des capacités de traitement (10) et d'expansion (20) part d'un ou de plusieurs orifices situé(s) sur la première virole cylindrique (12) en dessous du plateau (38) équipé du dispositif de drainage (40, 42), mais légèrement au-dessus du niveau de la matière granuleuse (22), lorsque celle-ci repose sur le plancher (34), pour déboucher dans la capacité d'expansion (20) par un ou plusieurs orifice(s) (18) situé(s) en point bas sur le fond bombé (16) commun aux deux capacités (10 et 20).

7. Installation selon l'une des revendications 1 à 6, caractérisée en ce que la capacité de traitement (10) comporte une tubulure supérieure (64) munie d'une vanne (66) débouchant au-dessus du niveau du plateau (38), sur le fond bombé (16) pour permettre l'admission des liquides de régénération et de rinçage lent.

8. Installation selon l'une des revendications 1 à 7, caractérisée en ce que la capacité de traitement (10) comporte une tubulure supérieure (48) débouchant au-dessus du niveau du plateau (38) sur la virole cylindrique (12) pour évacuer soit le liquide traité, par la vanne (50) et la tubulure (52), soit le liquide de rinçage rapide, par la vanne (62) et la tubulure (28).

9. Installation selon l'une des revendications 1 à 8, caractérisée en ce que la capacité de traitement (10) comporte une tubulure inférieure (56) débouchant au-dessous du niveau du plancher (34) par le fond bombé (14) pour permettre soit l'admission des liquides de détassage du lit, du liquide à traiter ou de liquide de rinçage rapide par l'intermédiaire de la tubulure (58) et de la vanne (60), soit l'évacuation des liquides de régénération et de rinçage rapide par l'intermédiaire de la vanne (68) et de la tubulure (28).

10. Installation selon l'une des revendications 1 à 9, caractérisée en ce que le dispositif de déversement du liquide de détassage du lit se présente sous forme d'un trop-plein central (26) muni d'une tubulure d'évacuation (28).

11. Installation selon l'une des revendications 1 à 10, caractérisée en ce que ladite matière granuleuse (22) est constituée par au moins une résine échangeuse d'ions.

12. Installation selon la revendication 11, caractérisée en ce que la résine est une résine anionique forte.

13. Installation selon la revendication 11, caractérisée en ce que la résine est constituée par un mélange homogène de résine anionique forte et de résine cationique forte.

14. Installation selon l'une des revendications 1 à 13, caractérisée en ce que les dimensions de la seconde virole (24) constituant la capacité d'expansion (20) sont déterminées de manière à éviter tout débordement de la matière granuleuse (22).

15. Procédé pour le traitement, et en particulier pour la déminéralisation de liquides, tels que l'eau, les hydrocarbures et les huiles, par passage au travers d'un lit de matière granuleuse en vue d'assurer un déplacement d'ions dans le lit maintenu à l'état compacté, du type selon lequel la régénération du lit est obtenue périodiquement selon une technique à contre-courant pratiqué par un courant descendant, ladite régénération étant obtenue par mise en oeuvre des opérations successives suivantes:

- détassage du lit par passage d'une partie de la matière granuleuse dans une capacité d'expansion surmontant une capacité de traitement au moyen d'un courant ascendant de liquide, après mise en communication des deux capacités;
- retour par gravité de la totalité de la matière granuleuse du lit dans la capacité de traitement, après interruption du courant ascendant de liquide de détassage;
- régénération et rinçage lent du lit en position basse dans la capacité de traitement après isolement des deux capacités d'expansion et de traitement; cette régénération et le rinçage lent sont obtenus par circulation à faible vitesse d'un ou plusieurs liquide(s) régénérant(s) dans le sens gravitaire;
- rinçage rapide et traitement par passage des liquides respectifs selon un courant ascendant assurant un compactage du lit en position haute dans la capacité de traitement, toute perturbation des couches de matière granuleuse du lit régénéré étant ainsi évitée.

16. Procédé selon la revendication 15, caractérisé en ce que le liquide utilisé pour assurer le détassage est constitué par de l'eau.

17. Procédé selon l'une des revendications 15 et 16, caractérisé en ce que le compactage du lit en position haute dans la capacité de traitement est obtenu à l'aide d'un courant ascendant d'eau et/ou de liquide à traiter.

18. Procédé selon l'une des revendications 15 à 17, caractérisé en ce que la régénération est obtenue par circulation descendante d'une solution de chlorure de sodium.

19. Procédé selon l'une des revendications 15 à 17, caractérisé en ce que la régénération est obtenue par circulation descendante successivement d'une solution de chlorure de sodium puis d'une solution de bicarbonate de sodium.

20. Procédé selon l'une des revendications 15 à 19 caractérisé en ce que l'opération de régénération proprement dite est suivie d'un rinçage lent par un courant descendant d'eau à faible vitesse.

21. Application du procédé selon l'une des revendications 13 et 15, à la déminéralisation de l'eau, en particulier à l'élimination des nitrates et des sulfates, et éventuellement à une élimination simultanée des ions calcium et magnésium.

## Patentansprüche

1. Vorrichtung zur Behandlung, insbesondere zum Entmineralisieren von Flüssigkeiten, wie von Wasser, Kohlenwasserstoffen und Ölen, beim Durchströmen eines Bettes von gekörntem Material, welches dazu bestimmt ist, eine Regeneration im Gegenstrom zur Strömungsrichtung der Flüssigkeit durch das Bett bei der Behandlung zu ermöglichen, wobei das Bett während der gesamten Behandlung in kompaktem Zustand gehalten wird und wobei die Vorrichtung aufweist:

- ein Behandlungsvolumen (10), welches durch ein erstes zylindrisches, vertikales Rohr (12) gebildet ist, das an seiner Unterseite durch einen gewölbten Boden (14) und an seiner Oberseite durch einen leicht konvex nach oben gewölbten Deckel (16) verschlossen ist;
- ein Ausdehnungsvolumen (20) für das Bett, welches durch ein zweites zylindrisches, vertikales Rohr (24) gebildet ist, das koaxial über dem Behandlungsvolumen (10) angeordnet ist, wobei das zweite Rohr (24) einen konkav nach unten gewölbten Boden (16) besitzt, der mit dem Deckel des Behandlungsvolumens (10) gemeinsam ist, und einen größeren Durchmesser als das erste zylindrische Rohr (12) aufweist, wobei die Oberseite des zweiten Rohres (24) zur Außenluft völlig offen bleibt und, vorzugsweise in ihrer Mitte, mit einer Austragsvorrichtung (26, 28) versehen ist;
- Vorrichtungen (30, 32) zur Verbindung bzw. Trennung des Behandlungsvolumens (10) und des Ausdehnungsvolumens (20), um periodisch eine Übertragung des gekörnten Materials (22) und eine Auflockerung des Bettes zu ermöglichen;
- Einrichtungen, welche für die periodische Zirkulation der zu behandelnden Flüssigkeit, der Regenerationslösung sowie einer Sprühflüssigkeit sorgen, wobei diese Einrichtungen derart ausgelegt sind, daß sie sorgen für:
  . eine periodische Auflockerung des Bettes (22) durch Beförderung eines Teiles des körnigen Materials des Bettes in das Ausdehnungsvolumen (20) mittels einer aufsteigenden Flüssigkeitsströmung, nachdem die beiden Volumina (10, 20) in Verbindung gebracht wurden;
  . eine Rückführung des gesamten gekörnten Materials des Bettes (22) in das Behandlungsvolumen (10);
  . eine Regeneration und eine langsame Spülung mittels abwärts gerichteter Flüssigkeitsströmung durch das Bett aus körnigem Material (22) nach Trennung der beiden Volumina (10 und 20);
  . eine Verfestigung des Bettes in einer Hochlage in dem Behandlungsvolumen (10) unter der Wirkung einer aufsteigenden Flüssigkeitsströmung, wobei sich eine schnelle Durchspülung des Bettes in dieser Hochlage ergibt, und
  . eine Behandlung durch aufsteigende Zirkulation der Flüssigkeit durch das Bett, welches in der Hochlage in kompaktem Zustand gehalten wird.

2. Vorrichtung nach Anspruch 1, dadurch gekennzeichnet, daß das Ausdehnungsvolumen (20) mit einer Druckwasserversorgung (44, 46) versehen ist, um die Rückführung des gekörnten Materials in das Behandlungsvolumen (10) zu ermöglichen.

3. Vorrichtung nach Anspruch 1 oder 2, dadurch gekennzeichnet, daß das Bett von gekörntem Material auf einer Bodenplatte (34) ruht, welche von dem gewölbten Boden (14) des Behandlungsvolumens (10) beabstandet ist und mit einer Abzugsvorrichtung (36) versehen ist, die im unteren Teil des ersten Rohres (12) angeordnet ist.

4. Vorrichtung nach einem der Ansprüche 1 bis 3, dadurch gekennzeichnet, daß die zwischen den beiden Volumina (10 und 20) angeordnete Trennvorrichtung (30, 32) durch einen oder mehrere, mit Schieberventil am (an) Ende(n) (32) versehene(n) Rohrstutzen (30) gebildet ist, welche(r) einen genügend großen Durchmesser aufweist bzw. aufweisen, um den Durchgang des körnigen Materials ohne Gefahr einer Verstopfung sicherzustellen.

5. Vorrichtung nach einem der Ansprüche 1 bis 4, dadurch gekennzeichnet, daß der obere Teil des Behandlungsvolumens (10) mit einer Platte (38) versehen ist, welche von dem gewölbten, dem Behandlungsvolumen (10) und dem Ausdehnungsvolumen (20) gemeinsamen Boden (16) beabstandet und mit einer Abzugsvorrichtung versehen ist, welch letztere

durch Düsen (42) und Ventile (40) gebildet wird, welche den Durchgang mit großer Durchsatzleistung in Aufwärtsrichtung und mit kleiner Durchsatzleistung in Abwärtsrichtung ermöglicht, derart, daß einerseits die Behandlung und andererseits die Regeneration im Gegenstrom ermöglicht wird.

6. Vorrichtung nach einem der Ansprüche 1 bis 5, dadurch gekennzeichnet, daß die Trennvorrichtung (30, 32) zwischen dem Behandlungsvolumen (10) und dem Ausdehnungsvolumen (20) von einer oder von mehreren Öffnungen ausgeht, welche auf dem ersten zylindrischen Rohr unterhalb der mit der Abzugsvorrichtung (40, 42) versehenen Platte (38), jedoch leicht oberhalb des Füllstandes des körnigen Materials (22), wenn dieses auf der Bodenplatte (34) ruht, angeordnet ist bzw. sind, um über eine oder mehrere Öffnung(en) (18) in das Ausdehnungsvolumen (20) einzumünden, wobei diese Öffnungen unten an dem beiden Volumina (10 und 20) gemeinsamen Boden (16) angeordnet sind.

7. Vorrichtung nach einem der Ansprüche 1 bis 6, dadurch gekennzeichnet, daß das Behandlungsvolumen (10) eine obere, mit einem Ventil (66) versehene Rohrleitung (64) aufweist, welche oberhalb des Niveaus der Platte (38) auf dem gewölbten Boden (16) mündet, um die Zufuhr von Regenerationsflüssigkeiten und eine langsame Spülung zu ermöglichen.

8. Vorrichtung nach einem der Ansprüche 1 bis 7, dadurch gekennzeichnet, daß das Behandlungsvolumen (10) eine oberhalb des Niveaus der Platte (38) in das zylindrische Rohr (12) mündende obere Rohrleitung (48) besitzt, um einerseits die behandelte Flüssigkeit durch ein Ventil (50) und einen Rohrstutzen (52) oder andererseits die Flüssigkeit zur schnellen Durchspülung über das Ventil (62) und den Rohrstutzen (28) auszubringen.

9. Vorrichtung nach einem der Ansprüche 1 bis 8, dadurch gekennzeichnet, daß das Behandlungsvolumen (10) eine untere, unterhalb des Niveaus der Bodenplatte (34) an den gewölbten Boden (14) angeschlossene Rohrleitung (56) besitzt, um einerseits die Zufuhr von Flüssigkeiten zur Auflockerung des Bettes, einer Behandlungsflüssigkeit oder einer Flüssigkeit zur schnellen Durchspülung über die Rohrleitung (58) und das Ventil (60) und andererseits die Ausbringung der Flüssigkeiten zur Regeneration und zur schnellen Durchspülung über das Ventil (68) und die Rohrleitung (28) zu ermöglichen.

10. Vorrichtung nach einem der Ansprüche 1 bis 9, dadurch gekennzeichnet, daß die Vorrichtung zum Ausbringen der Flüssigkeit zum Auflockern des Bettes die Form eines mittigen Überlaufrohres (26) besitzt, welches mit einer Ablauf-Rohrleitung versehen ist.

11. Vorrichtung nach einem der Ansprüche 1 bis 10, dadurch gekennzeichnet, daß das körnige Material (22) durch mindestens ein Ionenaustauschharz gebildet ist.

12. Vorrichtung nach Anspruch 11, dadurch gekennzeichnet, daß das Harz ein stark anionisches Harz ist.

13. Vorrichtung nach Anspruch 11, dadurch gekennzeichnet, daß das Harz durch eine homogene Mischung aus einem stark anionischen und einem stark kationischen Harz gebildet ist.

14. Vorrichtung nach einem der Ansprüche 1 bis 13, dadurch gekennzeichnet, daß die Abmessungen des das Ausdehnungsvolumen (20) bildenden zweiten Rohres (24) derart bestimmt sind, daß ein Überlaufen des körnigen Materials (22) völlig vermieden wird.

15. Verfahren zur Behandlung, insbesondere zum Entmineralisieren von Flüssigkeiten, wie von Wasser, Kohlenwasserstoffen und Ölen, beim Durchströmen eines Bettes von gekörntem Material, um eine Ablagerung von Ionen in dem in kompaktem Zustand gehaltenen Bett sicherzustellen, von der Art, nach der die Regeneration des Bettes periodisch nach einer Technik mit einer mit abwärts gerichteter Strömung durchgeführten Gegenströmung erreicht wird, wobei die Regeneration durch Ausführung der folgenden Verfahrensschritte erzielt wird:

- Auflockerung des Bettes durch Beförderung eines Teiles des körnigen Materials in ein Ausdehnungsvolumen, welches über einem Behandlungsvolumen angeordnet ist, mittels einer aufsteigenden Flüssigkeitsströmung nach Herstellung einer Verbindung zwischen den beiden Volumina;
- Rückführung des gesamten gekörnten Materials des Bettes unter Schwerkraft in das Behandlungsvolumen nach Unterbrechung der aufsteigenden Strömung der Auflockerungsflüssigkeit;
- Regeneration und langsame Spülung des Bettes in einer unteren Lage in dem Behandlungsvolumen nach Trennung des Ausdehnungsvolumens und des Behandlungsvolumens, wobei diese Regeneration und die langsame Durchspülung durch Zirkulation von einer oder mehreren Regenerationsflüssigkeit(en) mit geringer Geschwindigkeit in Schwerkraftrichtung erreicht wird;
- schnelle Durchspülung und Behandlung mittels Durchführung der jeweiligen Flüssigkeiten gemäß einer aufsteigenden Strömung, welche für eine Verfestigung des Bettes in einer oberen Lage in dem Behandlungsvolumen sorgt, wobei jegliche Aufwirbelung der Schichten des körnigen Materials des regenerierten Bettes auf diese Weise vermieden wird.

16. Verfahren nach Anspruch 15, dadurch gekennzeichnet, daß die Flüssigkeit, welche zur Auflockerung verwendet wird, von Wasser gebildet ist.

17. Verfahren nach einem der Ansprüche 15 und 16, dadurch gekennzeichnet, daß die Verfestigung des Bettes in einer oberen Lage in

dem Behandlungsvolumen mit Hilfe einer aufsteigenden Strömung von Wasser und/oder einer Behandlungsflüssigkeit erreicht wird.

18. Verfahren nach einem der Ansprüche 15 bis 17, dadurch gekennzeichnet, daß die Regeneration durch eine abwärts gerichtete Strömung einer Lösung von Natriumchlorid erreicht wird.

19. Verfahren nach einem der Ansprüche 15 bis 17, dadurch gekennzeichnet, daß die Regeneration durch abwärts gerichtete, aufeinanderfolgende Strömung einer Natriumchloridlösung und dann einer Natriumbicarbonatlösung erzielt wird.

20. Verfahren nach einem der Ansprüche 15 bis 19, dadurch gekennzeichnet, daß der Regenerationsvorgang im engeren Sinn von einer langsamen Durchspülung mit einer abwärts gerichteten Strömung von Wasser mit geringer Geschwindigkeit gefolgt wird.

21. Anwendung des Verfahrens nach einem der Ansprüche 13 und 15 zur Entmineralisierung von Wasser, insbesondere zur Entfernung von Nitraten und Sulfaten, und ggf. zur gleichzeitigen Entfernung von Kalzium- und Magnesiumionen.

## Claims

1. An installation for treating and in particular for demineralizing liquid, such as water, hydrocarbons and oils, by passing the liquid through a bed of granular material capable of being regenerated by backflow of a regenerator liquid through the bed in the opposite direction to the flow of liquid during treatment, the bed being maintained in the compacted state throughout treatment, the installation comprising:

a treatment volume (10) constituted by a first vertical cylindrical barrel (12) closed at the bottom by a curved end plate (14) and at the top by a curved end plate which is slightly upwardly convex (16);

an expansion volume (20) for the bed constituted by a second vertical cylindrical barrel (24) coaxially disposed above the said treatment volume (10), said second barrel (24) having a downwardly concave curved bottom plate (16) which is common with the top of the treatment volume (10) and which is of greater diameter than the diameter of the first cylindrical barrel (12), the top of the said second barrel (24) remaining open to the atmosphere and being equipped, preferably in the middle, with an overflow device (26, 28);

means (30,32) for putting the treatment (10) and expansion volumes (20) into communication with each other and for isolating them from each other, to periodically enable granular material (22) to be transferred therebetween, thereby uncompacting the bed;

means for periodically circulating the liquid to be treated, a regenerator solution, and also a rinsing liquid, said means being disposed in such a manner as to ensure:

periodic uncompacting of the bed (22) by passing a portion of the granular bed material into the expansion volume (20) by means of a rising flow of liquid after the two volumes (10 and 20) have been put into communication with each other;

returning all of the granular bed material (22) into the treatment volume (10);

regenerating and slow rinsing the bed of granular material (22) by a descending circulation of liquid through the bed, after said two volumes (10 and 20) have been isolated from one another;

compacting the bed in a high position in the treatment volume (10) by means of a rising current of liquid, rapid rinsing of the bed being performed in this high position; and

treatment of the liquid to be treated by means of a rising flow of said liquid through the bed which is held in the compacted state in the high position.

2. An installation according to claim 1, wherein the expansion volume (20) is fitted with a supply of water under pressure (44, 46) to facilitate returning the granular material into the treatment volume (10).

3. An installation according to claim1, wherein the bed of granular material rests on a floor (34) which is at a distance from the curved bottom end plate (14) of the treatment volume (10) and which is fitted with drainage means (36) disposed in the bottom portion of the first barrel (12).

4. An installation according to claim 1, wherein the isolating means (30, 32) disposed between the two volumes (10 and 20) is constituted by one or more pipes (30) equipped with sliding valves (32) and of sufficiently large diameter to enable the granular material to pass therethrough without any risk of clogging.

5. An installation according to claim 1, wherein the upper portion of the treatment volume (10) is equipped with an upper floor plate (38) at a distance from the curved end plate (16) common to the treatment volume (10) and the expansion volume (20); said upper floor plate being fitted with drainage means constituted by nozzles (42) and respective valves (40) enabling a high flow-rate of liquid in the upward direction and a low flow-rate of liquid in the downward direction thereby enabling both the treatment and the backflow regeneration.

6. An installation according to claim 5, wherein the isolating means (30, 32) between the treatment volume (10) and the expansion volume (20) run to one or more orifices through the first cylindrical barrel (12) at a point below the upper floor plate (38) and its drainage means (40, 42), but slightly above the level of the granular material (22) in the treatment volume when said granular material rests on the lower floor plate (34), said isolation means also communicating with the expansion volume (20) via one or more orifices (18) situated at the low point of the curved end plate (16) common to said two

volumes (10 and 20).

7. An installation according to claim 1, wherein the treatment volume (10) includes a top pipe (64) fitted with a valve (66) which opens out therein above the level of the high floor plate (38) in the curved end plate (16), said upper pipe serving to admit the regenerator liquid and the slow rinsing liquid.

8. An installation according to claims 1 to 7, wherein the treatment volume (10) includes a high level pipe (48) opening out therein above the level of the upper floor plate (38) through the cylindrical barrel wall (12) and serving to remove treated liquid via a first valve (50) and associated pipe (52) or else to remove the rapid rinsing liquid via a second valve (62) and associated pipe (28).

9. An installation according to claim 1, wherein the treatment volume (10) includes a bottom pipe (56) opening out therein via the curved bottom plate (14) below the lower floor (34), said bottom pipe serving to admit the liquid for uncompacting the bed, the liquid to be treated, and the rapid rinsing liquid via appropriate pipes (58) and valves (60) and also to remove the regenerator liquid and the slow rinsing liquid via appropriate pipes (28) and valves (68).

10. An installation according to claim 1, wherein the overflow device for the liquid used when uncompacting the bed is in the form of a central overflow device (26) fitted with a waste pipe (28).

11. An installation according to claim 1, wherein the said granular material (22) is constituted by at least one ion-exchange resin.

12. An installation according to claim 11, wherein the resin is a strongly anionic resin.

13. An installation according to claim 11, wherein the resin is constituted by a uniform mixture of strongly anionic resin and strongly cationic resin.

14. An installation according to claim 1, wherein the size of the second barrel (24) constituting the expansion volume (20) is determined so as to prevent any of the granular bed material (22) from overflowing.

15. A processing method, in particular for demineralizing liquid such as water, hydrocarbons and oil, by passing said liquids through a bed of granular material in order to displace the ions into the bed which is maintained in a compacted state, the method being of the type in which the bed is periodically regenerated by a backflow technique using a downwards flow of liquid, said regeneration being obtained by performing the following operations in sequence:

the bed is uncompacted by passing a portion of the granular material into an expansion volume disposed above the treatment volume using a rising flow of liquid after said two volumes have been put into communication with each other;

all of the granular bed material is returned under gravity into the treatment volume, after the rising flow of uncompacting liquid has been turned off;

the bed is regenerated and slowly rinsed while in a low position in the treatment volume after the treatment volume and the expansion volume have been isolated, said regeneration and said slow rinsing being obtained by a slow speed circulation of one or more regenerator liquid(s) in the downwards direction; and

rapid rinsing and treatment by passing the corresponding liquids upwardly to compact the bed in a high position in the treatment volume, thereby avoiding any disturbance of the layers of granular material in the regenerated bed.

16. A method according to claim 15, wherein the liquid used for uncompacting the bed is water.

17. A method according to claim 15, wherein the bed is compacted in the high position in the treatment volume by means of a rising flow of water and/or of the liquid to be treated.

18. A method according to claim 15, wherein regeneration is performed by a descending flow of a solution of sodium chloride.

19. A method according to claim 15, wherein regeneration is obtained by a descending flow initially of a solution of sodium chloride and subsequently of a solution of sodium bicarbonate.

20. A method according to claim 15, wherein the regeneration operation per se is followed by a slow rinsing operation using a slow downwards flow of water.

21. The application of the method according to claim 15 or the installation according to claim 13 to demineralizing water, and in particular to removing nitrates and sulfates therefrom, and optionally simultaneously removing calcium and magnesium ions therefrom.

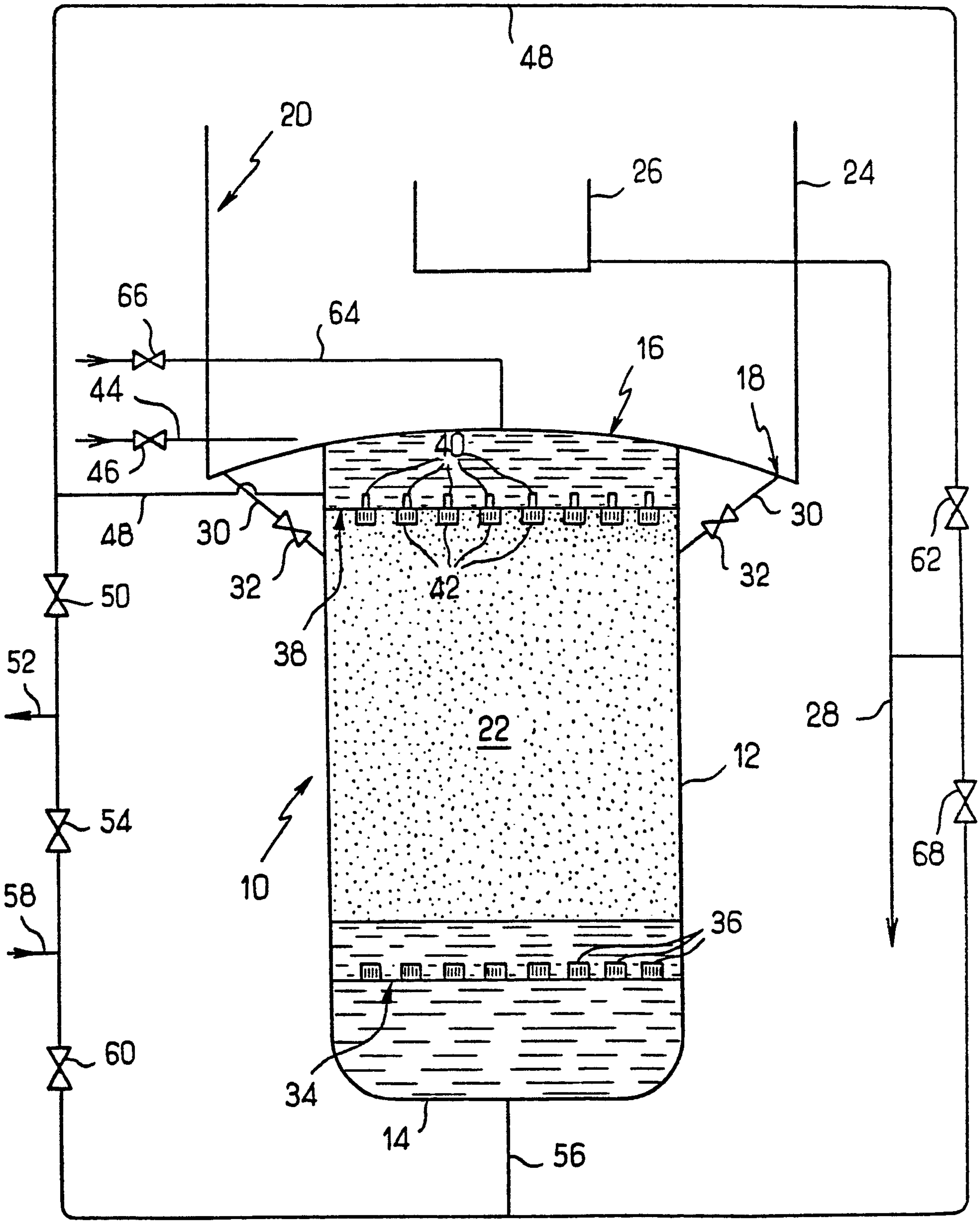
48
20
26
24
66
64
16
18
44
46
40
48
30
32
42
30
32
62
50
38
52
22
28
12
54
10
68
58
36
60
34
14
56

FIG_1

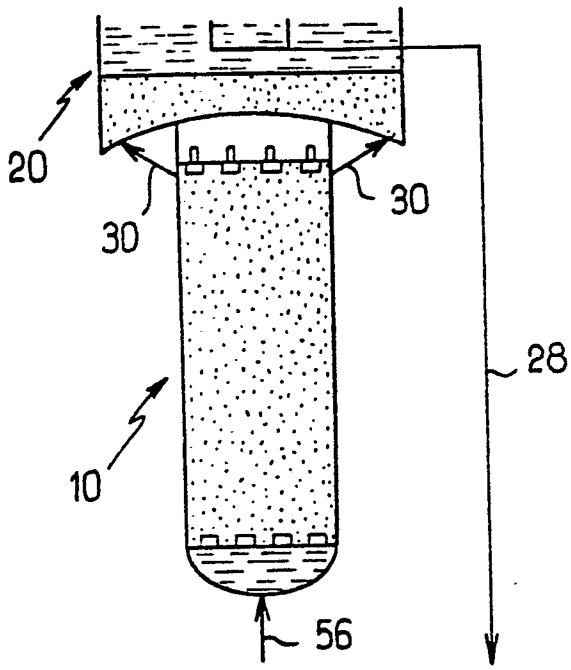


FIG_2a

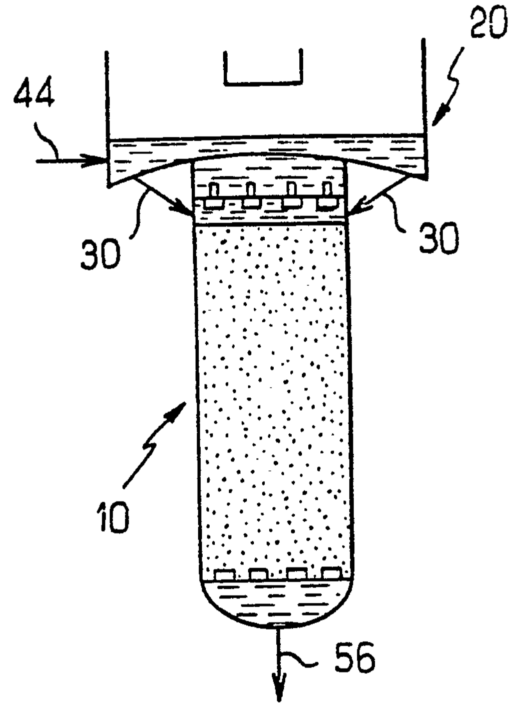


FIG_2b

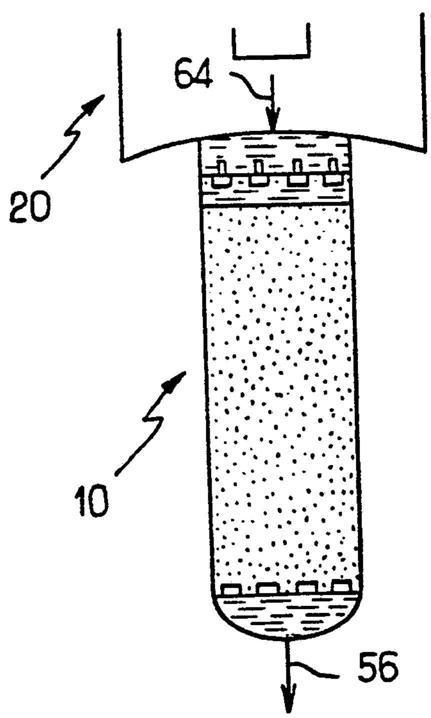


FIG_2c

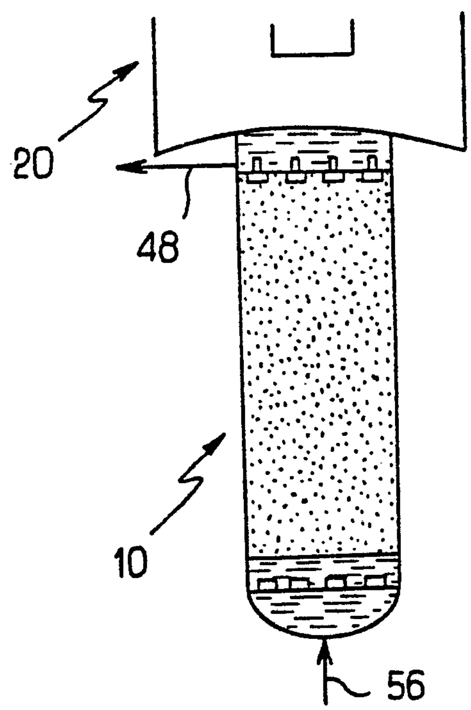


FIG_2d